# FASCICULE DE BREVET EUROPEEN

(11) **EP 3 526 887 B1**
(45) Date de publication et mention de la délivrance du brevet: **28.07.2021**
(21) Numéro de dépôt: 17771469.8
(22) Date de dépôt: 25.09.2017
(51) Int. Cl.: H02K 9/18, H02K 9/19

(54) **MACHINE ÉLECTRIQUE TOURNANTE FERMÉE COMPORTANT UN SYSTÈME DE REFROIDISSEMENT INTERNE PAR AIR**
GESCHLOSSENE ELEKTRISCHE DREHMASCHINE MIT EINEM INTERNEN LUFTKÜHLSYSTEM
CLOSED ROTARY ELECTRIC MACHINE COMPRISING AN INTERNAL AIR COOLING SYSTEM

(30) Priorité: 14.10.2016 FR 1659996
(43) Date de publication de la demande: 21.08.2019
(73) Titulaire: Mavel EDT S.p.A., 11026 Pont-Saint-Martin (AO) (IT)
(72) Inventeur: DIB, Wissam, 92150 Suresnes (FR); FAVRE, Luca, 11010 Valpelline (AO) (IT); BETTONI, Davide, Settimo Vittone To Italy (IT)
(74) Mandataire: Leoncini, Alberto
(86) Numéro de dépôt international: PCT/EP2017/074237
(87) Numéro de publication internationale: WO 2018/069030

(56) Documents cités:
- EP-A2- 2 634 896
- WO-A1-2015/150100
- CH-A- 545 552
- FR-A1- 2 934 432
- FR-A5- 2 056 482
- US-A- 2 571 872

## Description

### Domaine de l'invention

La présente invention concerne le domaine des machines électriques tournantes, en particulier le refroidissement de machines électriques tournantes.

Elle concerne plus particulièrement le refroidissement, notamment par air, d'une machine électrique tournante à réluctance synchrone.

### Contexte général

Une machine électrique tournante comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entrainer en rotation le rotor. Le rotor est typiquement formé d'un corps formé d'un empilage de tôles, et placé sur un arbre de rotation. Ces tôles comprennent des logements pour des aimants permanents ou des bobines formant des pôles magnétiques à la périphérie du rotor. Les aimants peuvent apparaître à la surface du rotor ou être complètement intégrés au sein du rotor.

Les machines électriques s'échauffent du fait des pertes électromagnétiques (pertes par effet Joule et pertes fer) et mécaniques. Cet échauffement nuit à leur fonctionnement et conduit à la dégradation de leurs performances. Par exemple, si les aimants ne sont pas refroidis, le flux magnétique est moins intense, ce qui conduit à une perte de couple et donc une dégradation des performances de la machine électrique. Une démagnétisation irréversible des aimants peut se produire. Le bobinage est également sensible aux élévations de température : plus la température du bobinage est élevée, plus la conductivité électrique du cuivre et la durée de vie du bobinage sont réduites. La résistance du cuivre augmentant, il y a également une perte de rendement. Les divers composants électromagnétiques d'une machine électrique tournante, ainsi que certains matériaux isolants utilisés dans les pièces de la machines électrique, sont ainsi sensibles à l'échauffement produit en fonctionnement, et leur refroidissement est indispensable pour dissiper la chaleur produite, afin de conserver un bon rendement de la machine, d'assurer une répétabilité de ses performances, d'allonger sa durée de vie et de limiter la maintenance.

La recherche d'un refroidissement performant est donc une préoccupation majeure pour les fabricants et les intégrateurs de machines électriques tournantes.

Différents types de refroidissement existent, souvent adaptés à la puissance de la machine, parmi lesquels les systèmes de refroidissement par air, généralement d'efficacité moindre et agressifs pour l'intérieur du moteur, les systèmes de refroidissement par liquide, par exemple par eau, notamment utilisés dès que les pertes sont importantes comme dans le cas des moteurs de traction électriques, ou par huile. D'autres systèmes de refroidissement par hélium ou azote liquide peuvent être utilisés pour les machines électriques de centrales électriques.

Bien que le refroidissement par air constitue une solution intéressante économiquement, comparativement aux autres systèmes de refroidissement, il présente généralement une efficacité moindre, et est ainsi souvent cantonné au refroidissement de machines électriques peu puissantes. C'est le cas par exemple dans les applications de traction où le refroidissement par air est typiquement utilisé pour des moteurs électriques d'une puissance inférieure à 20 kW. Au-delà un système de refroidissement par liquide est souvent mis en œuvre.

Par ailleurs, le refroidissement par air requiert généralement la circulation d'air entre l'extérieur et l'intérieur de la machine électrique, ce qui ajoute à la limitation de son champ d'application, réservé à des machines électriques « ouvertes », c'est-à-dire non étanches.

On connait également des systèmes de refroidissement par air de machines électriques « fermées » (étanches), qui se limitent au refroidissement de la partie extérieure du carter de la machine, par convection forcée d'air au moyen d'un ventilateur solidaire de l'arbre. Dans ces systèmes, la chaleur générée au rotor est cédée à l'air de l'entrefer et au stator, et la chaleur du stator est évacué par le carter. Cependant, de tels systèmes n'évacuent pas de manière satisfaisante la chaleur générée au sein de la machine, notamment au niveau du rotor, ce qui rend difficile son utilisation, tout particulièrement pour le refroidissement de machines électriques à rotation très rapide. L'efficacité de tels systèmes de refroidissement par air de machines fermées est donc limitée, et leur utilisation est réservée là encore à des machines de faible puissance.

FR2056482 décrit une machine dynamo-électrique comprenant une carcasse comportant une paroi cylindrique en substance continue et plusieurs passages axiaux clos qui s'étendent sur moins d'un tiers de la circonférence de la paroi, deux flasques d'extrémité à chaque extrémité de la carcasse pour déterminer un espace dans celle-ci, un rotor monté sur un arbre qui traverse l'espace et les flasques et comportent des passages axiaux, un stator disposé dans la carcasse autour du rotor et en contact direct, en substance sur la totalité de la surface externe du stator, avec la paroi de la carcasse en vue d'une transmission de chaleur directe, un premier ventilateur installé dans le dit espace, sur l'arbre, entre le rotor et un des flasques d'extrémité, pour faire circuler de l'air dans les passages de la carcasse puis en sens opposé dans les passages du rotor.

FR2934432 décrit un moteur électrique comportant un stator avec un bâti et des bobines répartis dans le bâti, et un rotor monté mobile en rotation dans le stator et comportant des pôles magnétiques à la périphérie du rotor. Le cadre comprend des aubes de refroidissement à sa périphérie extérieure. Le cadre est traversé des deux côtés par des conduits de refroidissement. Un ventilateur provoque une circulation forcée du flux d'air dans les conduits de refroidissement le long des aubes de refroidissement. Les conduits de refroidissement sont directement définis par des tôles d'un empilement de tôles formant un noyau magnétique.

WO2015/150100 décrit un moteur à induction comprenant un boîtier, un stator, un rotor et des ailettes de refroidissement sur la surface extérieure du boîtier. Le rotor comprend des conduits d'air internes configurés pour permettre le passage d'un flux d'air à travers celui-ci. Le moteur comprend des conduits d'air externes en communication fluidique avec les conduits d'air internes pour former un circuit de circulation d'air. Les conduits d'air extérieurs sont disposés radialement à l'extérieur des ailettes de refroidissement.

CH545552 décrit un moteur électrique asynchrone fermé à armature à cage, en particulier pour fonctionnement à glissement, caractérisé en ce qu'au moins l'une des deux faces d'extrémité de l'armature a sa cage en liaison intime avec un corps conducteur de chaleur coaxial à l'arbre moteur et dans un évidement annulaire de la bague en saillie de bouclier d'extrémité transfère la chaleur de la cage à ce bouclier d'extrémité et ses nervures.

US2571872 décrit un moteur comprenant un châssis ayant un stator monté à l'intérieur et ayant des couvercles d'extrémité et qui supportent un rotor. Le cadre est construit à partir d'un boîtier intérieur et d'une coque qui enferme le boîtier. Ce boîtier intérieur est de préférence construit en moulage de sorte qu'il fournira un boîtier antidéflagrant d'une structure monobloc unitaire.

EP2634896 décrit un moteur comprenant une carcasse délimitant un compartiment intérieur définissant un volume intérieur de gaz. Une unité de conversion convertit une énergie électrique reçue par le moteur en énergie mécanique. Une unité de refroidissement liquide refroidit le compartiment et une unité de couplage thermique est prévue entre le compartiment et l'unité de refroidissement. L'unité de couplage a un ecnangeur de chaleur connecté sur la carcasse. L'echangeur présente un support annulaire applique sur la carcasse et des ailettes prolongées vers un axe central du support a partir d'une surface interne du support.

### Objectifs et résumé de l'invention

La présente invention a pour objectif de surmonter les inconvénients de l'art antérieur mentionné, et de fournir un système de refroidissement performant pour une machine électrique tournante fermée, en vue de garantir les performances et le rendement souhaités de la machine électrique. En particulier, la présente invention vise à permettre un refroidissement efficace de l'arbre, du rotor, des têtes de bobines, ainsi que du carter d'une machine électrique tournante pouvant présenter un indice de protection «IP» élevé conformément à la norme EN 60529, typiquement un indice de protection IP67. L'invention vise en outre à fournir un système de refroidissement qui ne consomme pas (système passif) ou peu d'énergie électrique pour fonctionner, et qui limite les pertes mécaniques liées au fonctionnement du système. Ainsi, pour atteindre au moins l'un des objectifs susvisés, parmi d'autres, la présente invention propose une machine électrique tournante fermée selon la revendication 1.

Les modes de réalisation préférés sont définis dans les revendications dépendantes. L'invention est exposée dans le jeu de revendications joint. Les modes de réalisation et / ou exemples de la description suivante qui ne sont pas couverts par les revendications annexées sont considérés comme ne faisant pas partie de la présente invention.

### Brève description des figures

Les figures 1A et 1B sont des vues en perspective, respectivement de l'avant et de l'arrière, de la machine électrique dans lequel le refroidissement de la machine est intégralement réalisé par air.
Les figures 2A et 2B sont des vues en perspective, respectivement de la face interne et de la face externe, du flasque avant de la machine électrique.
Les figures 3A et 3B sont des vues en perspective, respectivement de la face interne et de la face externe, du flasque arrière de la machine électrique.
Les figures 4A et 4B sont respectivement une vue en perspective et une vue de profil de la partie tournante de la machine électrique selon l'invention, comportant deux ventilateurs internes.
La figure 5 est une vue de dessus de la machine électrique.
La figure 6 est une vue en coupe longitudinale de la machine électrique.
Les figures 7A, 7B et 7C sont des vues en perspective avec arrachement de la partie arrière (figure 7A) et de la partie avant (figure 7B) de la machine électrique, ainsi qu'une vue en coupe longitudinale de la machine électrique illustrant le flux d'air externe généré par le ventilateur externe et circulant à l'extérieur de la carcasse
Les figures 8A et 8B sont respectivement une vue en plan de la face arrière de la machine électrique et une vue en perspective de cette même face arrière.
Les figures 9A et 9B sont des vues en perspective, respectivement de l'avant et de l'arrière, de la machine électrique selon un mode de réalisation non supporté par les revendications annexées dans lequel le refroidissement de la machine est réalisé par air et par liquide.
La figure 9C est une vue en coupe longitudinale de la machine électrique selon un mode de réalisation non supporté par les revendications annexées.

Sur les figures, les mêmes références désignent des éléments identiques ou analogues.

### Description de l'invention

L'objet de l'invention est de proposer une machine électrique tournante fermée intégrant un système de refroidissement qui comprend deux ventilateurs internes montés fixes sur l'arbre du rotor, aux deux extrémités du rotor, faisant chacun face à la face interne d'un flasque comportant des ailettes aptes à orienter le flux d'air créé par les ventilateurs internes et aptes à capter sa chaleur.

Par machine électrique fermée on entend une machine électrique dont le rotor et le stator sont enfermés dans une carcasse étanche, qu'on peut aussi désigner sous le terme de carter.

Selon l'invention, la carcasse, qui contient le rotor et le stator de la machine électrique, est fermée de manière étanche par deux flasques.

Le système de refroidissement comporte également des moyens de refroidissement externe pour refroidir la carcasse et les flasques, qui peut être par air ou par liquide.

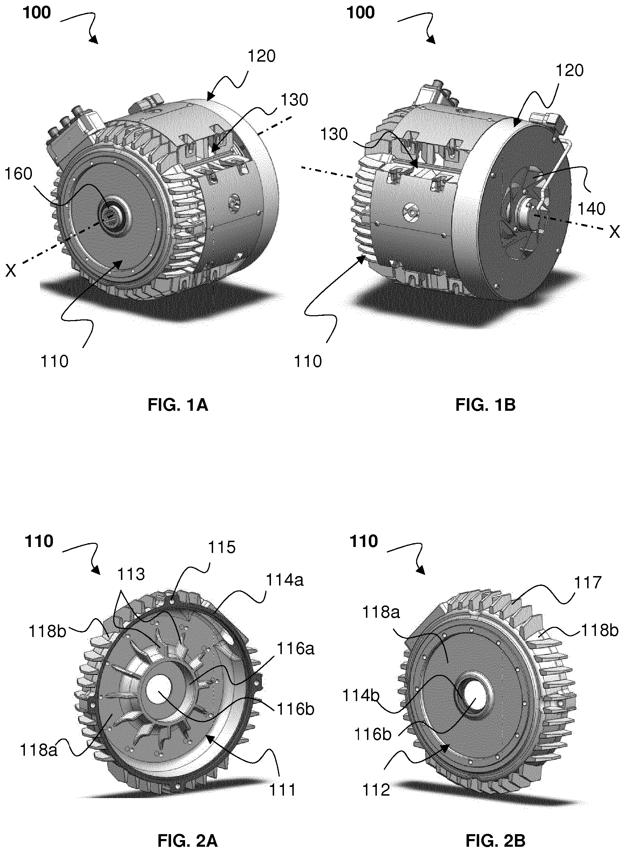

Les figures 1A et 1B, représentent une machine électrique fermée selon un premier mode de réalisation de l'invention, qui peut être utilisée comme moteur électrique de traction dans un véhicule électrique ou hybride.

Par exemple, un moteur tel que représenté aux figures 1A et 1B est un moteur à réluctance synchrone, aussi appelé synchro-réluctant, d'une puissance continue de 35 kW, de puissance transitoire (Peak) 52 kW, et pouvant fonctionner avec une tension d'alimentation du bus DC de 350 V.

Bien que s'appliquant avantageusement aux machines électriques à réluctance synchrone, la présente invention ne se limite pas à cette topologie de machine électrique, et concerne plus largement tout type de machine électrique, en particulier les machines électriques dont la puissance est comprise entre 20 kW et 180 kW. Plus spécifiquement, les machines électriques selon le premier mode de réalisation peuvent avoir une puissance comprise entre 20 et 75 kW, et les machines électriques selon le deuxième mode de réalisation décrit plus loin peuvent avoir une puissance comprise entre 20 kW et 180 kW.

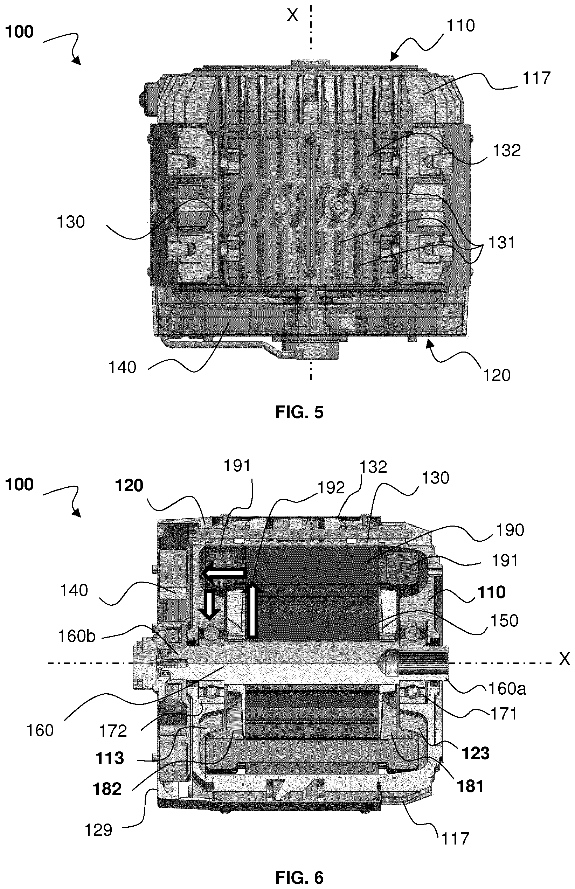

Le moteur électrique 100 comporte une carcasse 130 fermée de manière étanche par un flasque avant 110 et un flasque arrière 120. Le stator, avec ses bobines, et le rotor du moteur électrique sont contenus dans la carcasse étanche 130. L'intérieur de la carcasse 130 est mieux représenté à la figure 6, décrite en détails plus bas en relation avec le système de refroidissement du moteur. Une boîte à bornes (non référencée) dans laquelle s'effectuent les branchements est fixée sur la carcasse 130, en particulier au niveau du flasque 110 qui ferme la carcasse à l'avant du moteur. La carcasse 130 et les flasques 110 et 120 sont en métal, par exemple en aluminium ou en fer.

Selon le premier mode de réalisation de l'invention, les moyens de refroidissement externe comprennent un ventilateur externe 140 disposé en regard de la face externe du flasque arrière 120 et monté fixe sur l'arbre de rotation 160 du rotor, pour envoyer de l'air extérieur le long de la carcasse 130 en direction du flasque avant 110.

L'arbre de rotation 160, tournant autour de l'axe (X), est porté par les flasques avant 110 et arrière 120 : le flasque avant 110, disposé à une première extrémité de la carcasse 130, supporte le côté d'entrainement de la charge de l'arbre de rotation 160, et le flasque arrière 120, disposé à une deuxième extrémité de la carcasse opposée à la première extrémité, supporte le côté opposé au côté d'entraînement de la charge de l'arbre de rotation 160.

Dans le reste de la description, on désignera par avant de la machine le côté de la machine où se fait l'entrainement d'une charge par l'arbre de rotation du rotor, et par arrière de la machine le côté opposé.

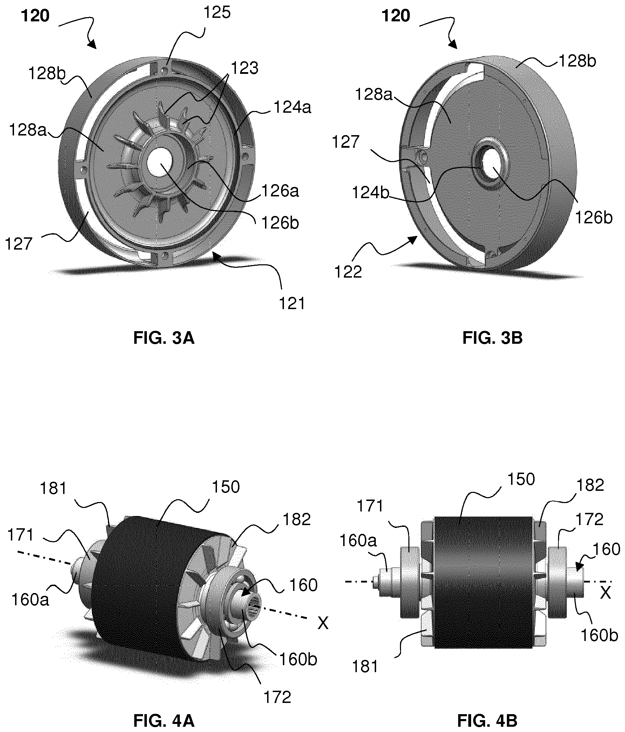

Plus spécifiquement, les flasques avant 110 et arrière 120 comportent chacun une face interne (111, 121), une face externe (112, 122), et un logement (116a, 126a) positionné dans une partie médiane de la face interne (111, 121) pour recevoir un palier, tel que représenté sur les figures 2A, 2B, 3A et 3B. Les paliers 171 et 172, visibles sur les figures 4A et 4B, supportent le côté d'entraînement d'une charge 160a de l'arbre de rotation 160 et le côté opposé au côté d'entraînement de la charge 160b de l'arbre de rotation.

Les flasques avant 110 et arrière 120 comportent des moyens d'étanchéité pour fermer de manière étanche la carcasse 130.

Le flasque avant 110 est représenté aux figures 2A et 2B, notamment sa face interne 111 à la figure 2A et sa face externe 112 à la figure 2B.

Le flasque avant 110 comporte une partie centrale en forme de couronne 118a et une partie périphérique de forme cylindrique 118b. La face interne 111, tournée vers l'intérieur de la carcasse 130, comporte un logement 116a positionné dans la partie médiane de la face interne destiné à recevoir le palier 171. Ce logement 116a comporte en son centre un orifice 116b prévu pour le passage de l'arbre de rotation 160 du rotor. Des joints d'étanchéité (114b, 114a) sont prévus au niveau de l'orifice 116b de passage de l'arbre 160 et sur le périmètre de la partie périphérique 118b destinée à venir en contact avec la carcasse 130. La partie périphérique 118b du flasque 110 comporte également des points de fixation 115, par exemple au nombre de quatre tel qu'illustré, pour fixer le flasque avant 110 à la carcasse 130.

Selon l'invention, la face interne 111 du flasque avant 110 comporte un ensemble d'ailettes 113, agencées sur la périphérie du logement 116a du palier. Ces ailettes ont pour fonction d'orienter le flux d'air créé par la rotation d'un ventilateur interne 181 placé entre le palier et le rotor 150, comme décrit plus bas en relation avec les figures 4A, 4B et 6, et de capter la chaleur de ce flux d'air. La face interne 111 du flasque avant 110 comporte par exemple douze ailettes 113.

Les ailettes 113 sont de préférence réparties régulièrement autour du logement 116a. De préférence, les ailettes et le corps du flasque forme une seule entité (monobloc), par exemple issu d'une fabrication à l'aide d'un moule. Avantageusement, les ailettes ont une forme telle qu'elles contribuent à une circulation de l'air interne spécifique qui refroidit efficacement les têtes de bobines et la partie tournante de la machine. Chaque ailette est de préférence plane, et a une forme générale de trapèze dont les bases (côtés opposés parallèles) sont orthogonales à l'axe (X), et dont le côté opposé au logement 116a n'est pas droit mais courbe, présentant une concavité (par rapport à un point situé à la périphérie 118b du flasque dans le prolongement radial de l'ailette). Cette concavité du bord de l'ailette permet d'assurer une proximité optimale avec les têtes de bobines tout en assurant un écoulement d'air optimisé pour un refroidissement efficace. Cette description des ailettes est faite sur la base des parties visibles à la surface du flasque (et non sur la base d'une coupe du flasque). Selon une coupe longitudinale passant par l'ailette, cette dernière présente une forme générale de trapèze rectangle dont le côté formant un angle droit avec les bases constitue la paroi du logement 116 (visible sur la figure 6). Les ailettes internes ont en quelque sorte une forme d'aile d'oiseau dont la partie scapulaire serait en regard de la face interne du flasque. Les dimensions des ailettes sont telles qu'un espace maximum est laissé entre le ventilateur interne et la partie sommitale des ailettes en regard du ventilateur interne, de manière à conserver une proximité avec le ventilateur interne adaptée à une bonne circulation de l'air dans l'espace libre laissé entre le flasque et les éléments internes de la machine. A titre d'exemple nullement limitatif, un espace de 4 à 5 mm est laissé entre le ventilateur interne et le sommet des ailettes, pour un dispositif comportant des flasques de diamètre interne d'environ 20 cm munis d'ailettes internes d'environ 20 mm de long, la longueur des ailettes (ou encore hauteur) étant entendue comme la dimension des ailettes selon l'axe (X).

La partie périphérique 118b du flasque avant 110 comporte en outre des ailettes dissipatives de la chaleur 117 sur sa face externe 112. Les ailettes dissipatives 117 sont allongées sensiblement selon un axe parallèle à l'axe (X) du rotor. Lorsque la carcasse 130 a une surface externe comportant un ensemble d'ailettes de refroidissement 131, tel que détaillé à la figure 5, les ailettes 117 du flasque avant 110 prolongent alors les passages formés par les ailettes de refroidissement 131 de la carcasse 130.

Le flasque arrière 120, illustré pour sa face interne 121 à la figure 3A et sa face externe 122 à la figure 3B, comporte une partie centrale en forme de couronne 128a reliée à une partie périphérique cylindrique 128b. Comme pour le flasque avant 110, la face interne 121, tournée vers l'intérieur de la carcasse 130, comporte un logement 126a positionné dans la partie médiane de la face interne destiné à recevoir le palier 172. Ce logement 126a comporte en son centre un orifice 126b prévu pour le passage de l'arbre de rotation 160 du rotor. Des joints d'étanchéité (124b, 124a) sont prévus au niveau de l'orifice 126b de passage de l'arbre 160 et sur le périmètre de la partie centrale 128b destinée à venir en contact avec la carcasse 130. La partie périphérique 128b et la partie centrale 128a du flasque arrière 120 comportent des liaisons 125 qui comprennent également les points de fixation du flasque à la carcasse. Par exemple, le flasque arrière comporte quatre liaisons 125 avec quatre points de fixation (orifices pour passage d'une vis par exemple).

Selon l'invention, la face interne 121 du flasque arrière 120 comporte, de la même manière que pour le flasque avant 110, un ensemble d'ailettes 123, agencées à la périphérie du logement 126a du palier. Ces ailettes 123 ont la même fonction d'orientation du flux d'air créé par la rotation d'un ventilateur interne 182 placé entre le palier et le rotor 150, comme décrit plus bas en relation avec les figures 4A, 4B et 6, et de captage de la chaleur de ce flux d'air. La face interne 121 du flasque arrière 120 comporte par exemple douze ailettes 123.

Les ailettes 123 sont de préférence réparties régulièrement autour du logement 126a. Leur forme et leurs dimensions sont de préférence identiques à celles des ailettes 113 de la face interne 111 du flasque avant 110, décrites plus haut.

Le flasque arrière 120 comporte au moins une ouverture 127 disposée entre la partie centrale 128a et la partie périphérique 128b pour diriger l'air extérieur envoyé par le ventilateur externe 140 le long de la carcasse 130, notamment pour diriger cet air dans des passages formés par l'ensemble des ailettes de refroidissement 131 de la surface externe de la carcasse 130. Le flasque arrière 120 comporte par exemple quatre ouvertures de ce type, tel qu'illustré aux figures 3A et 3B. Ces ouvertures 207 ont par exemple une forme d'arc de cercle, et sont réparties uniformément sur le périmètre de la partie centrale 128a du flasque 120.

La figure 5 correspond à une vue « du dessus » du moteur selon le premier mode de réalisation de l'invention, montrant plus en détails la partie latérale du moteur. La carcasse 130, typiquement en métal, par exemple en fer ou aluminium, peut avoir à sa surface externe un ensemble d'ailettes de refroidissement 131, allongées selon un axe sensiblement parallèle à l'axe du rotor (X). Par sensiblement parallèle à l'axe (X), on entend à plus ou moins 25° degrés près par rapport à cet axe (X). Ces ailettes de refroidissement 131 ont pour rôle d'augmenter la surface d'échange de la carcasse avec l'air pour une dissipation plus grande de la chaleur, et de diriger le flux d'air externe à la surface de la carcasse de manière à couvrir toute la longueur de la carcasse d'un flasque à un autre. Une continuité de passage du flux d'air externe est créée lorsque la partie périphérique du flasque avant 110 comporte également des ailettes de dissipation 117, de préférence orientées dans le même sens que les ailettes de refroidissement de la carcasse 130, améliorant ainsi le refroidissement de la carcasse et du flasque avant.

Dans la description, on entend par air externe l'air extérieur à la machine électrique tournante qui est fermée, et par air interne l'air contenu dans la machine électrique fermée, plus précisément l'air enfermé dans la carcasse étanche de la machine.

Le moteur électrique comporte en outre des plaques métalliques 132, de préférence en aluminium, montées sur la carcasse 130 et entourant les ailettes de refroidissement 131, pour maintenir l'air à proximité de la surface externe de la carcasse 130 et des ailettes de refroidissement 131 lors de sa circulation le long de la carcasse. Dans l'exemple de moteur représenté à la figure 5, les plaques métalliques 132 sont légèrement incurvées de manière à suivre la forme de la surface extérieure de la carcasse. Sur la figure 5, les plaques métalliques 132 sont représentées avec une transparence afin de laisser apparaître la structure qu'elles surmontent. Il en est de même pour le flasque arrière 120, laissant apercevoir en transparence le ventilateur externe 140. Les plaques métalliques 132 sont de préférence réparties régulièrement autour de la carcasse, par exemple huit plaques sont fixées sur la carcasse, regroupées deux par deux pour former des unités espacées autour de la carcasse.

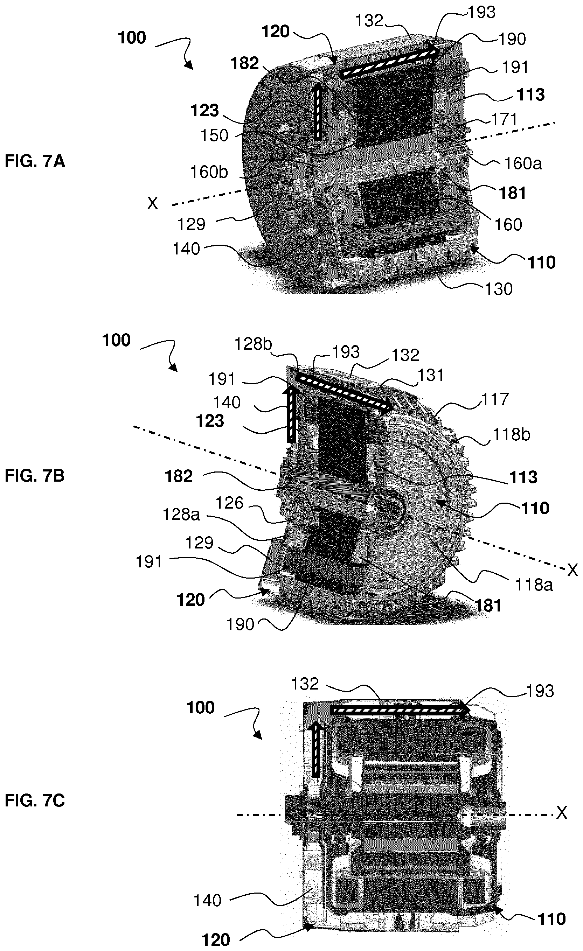

Les plaques métalliques 132 sont montées sur la carcasse de manière à laisser un passage pour la circulation de l'air extérieur envoyé par le ventilateur externe 140. Ainsi, tel que cela est bien visible sur la figure 7A décrite plus loin, les plaques métalliques 132 peuvent s'appuyer sur la partie périphérique du flasque arrière 120.

Les figures 4A et 4B sont des vues en perspective et de profil de la partie tournante de la machine électrique, qui porte, selon l'invention, deux ventilateurs internes 181 et 182. Le rotor 150 est fixé à l'arbre de rotation 160, ce dernier étant supporté par les paliers 171 et 172, par exemple à roulement à billes, respectivement du côté d'entraînement de la charge 160a de l'arbre de rotation 160 et du côté opposé au côté d'entraînement de la charge 160b de l'arbre de rotation 160. Le rotor 150 est monté mobile en rotation dans le stator 190 (non visible sur les figures 4A et 4B). Selon l'invention, et quelque que soit le mode de réalisation envisagé, un premier ventilateur 181 et un deuxième ventilateur 182 sont montés fixes sur l'arbre de rotation 160, de part et d'autre du rotor, entre le corps du rotor et un palier (171, 172). Le premier ventilateur 181 est donc disposé côté avant du moteur, et fait face à la face interne 111 du flasque avant 110 du moteur, et le deuxième ventilateur 182 est disposé côté arrière du moteur, et fait face à la face interne 121 du flasque arrière 120. Cette paire de ventilateurs internes (181, 182) est disposée à l'intérieur de la carcasse pour créer un flux d'air à l'intérieur de la carcasse lors de la rotation du rotor.

La figure 6 est une vue en coupe du moteur 100 selon le premier mode de réalisation de l'invention, détaillant les éléments de la machine et illustrant la circulation de l'air à l'intérieur de la carcasse étanche (flux d'air 192 représenté par les flèches) provoquée par l'interaction entre les ventilateurs internes 181 et 182 en fonctionnement et les éléments structuraux de la machine au sein de la carcasse 130, notamment la structure des faces internes des flasques 110 et 120.

Le moteur 100 comprend le stator 190, disposé dans la carcasse 130, comportant des bobines et dans lequel est monté mobile en rotation le rotor 150 fixé à l'arbre de rotation 160. Le système de refroidissement du moteur comporte d'une part la paire de ventilateurs internes 181 et 182, en interaction avec les ailettes des flasques, et d'autre part des moyens de refroidissement externe, i.e. le ventilateur externe 140 selon le premier mode de réalisation, pour refroidir la carcasse et les flasques avant et arrière.

Les ventilateurs internes 181 et 182, lors de la rotation du rotor, interagissent avec les ailettes 113 et 123 des faces internes 111 et 121 des flasques avant et arrière (110, 120) pour créer un flux d'air interne orienté dont la chaleur est captée par les ailettes des faces internes des flasques.

Plus spécifiquement, les ailettes (113, 123) de la face interne (111, 121) des flasques avant et arrière (110, 120) sont aptes à diriger le flux d'air 192 créé par chaque ventilateur interne (181, 182) de manière radiale vers les têtes 191 des bobines du stator 190 (écoulement selon une direction qui est centrifuge autour de l'axe (X) de l'arbre de rotation 160), puis à retourner le flux d'air depuis les têtes 191 de bobines vers le centre du flasque, d'abord selon une direction parallèle à l'axe (X) au niveau des têtes de bobines, puis radialement vers l'arbre de rotation (écoulement parallèle à l'axe (X) puis selon une direction centripète autour de l'axe (X)). Une telle circulation d'air interne est ainsi réalisée côté avant et côté arrière du moteur, de part et d'autre du rotor 150. Les ailettes des faces internes des flasques 113 et 123, en plus d'orienter le flux d'air interne, permettent de dissiper la chaleur du flux d'air et donc de refroidir les têtes 191 de bobine, ainsi que l'arbre 160 et le rotor 150 de la machine électrique. Le ventilateur 140, positionné sur la face externe du flasque arrière 120, contribue au refroidissement de la carcasse 130 et des flasques par la génération d'un flux d'air externe, qui est d'abord dirigé radialement vers la périphérie de la face externe du flasque arrière 120, puis qui est dirigé vers le flasque avant 110 parallèlement à l'axe de rotation (X), de manière à longer la surface extérieure de la carcasse 130 munie des ailettes de refroidissement 131, et surmontée des plaques métalliques 132 qui confinent le flux d'air à la surface extérieure de la carcasse 130. L'air passe ainsi de préférence dans les passages formés entre les ailettes allongées sensiblement selon l'axe (X), en étant confiné à l'espace formé entre les plaques métalliques et la surface extérieure de la carcasse 130. Les ouvertures 127 du flasque arrière 120 permettent le passage de l'air extérieur envoyé par le ventilateur 140 de la face externe du flasque vers la surface extérieure de la carcasse 130 munie des ailettes de refroidissement 131.

Le flux d'air externe est représenté par des flèches 193 dans les figures 7A, 7B et 7C, qui montrent le moteur selon le premier mode de réalisation respectivement selon une vue arrière, une vue avant et une coupe longitudinale.

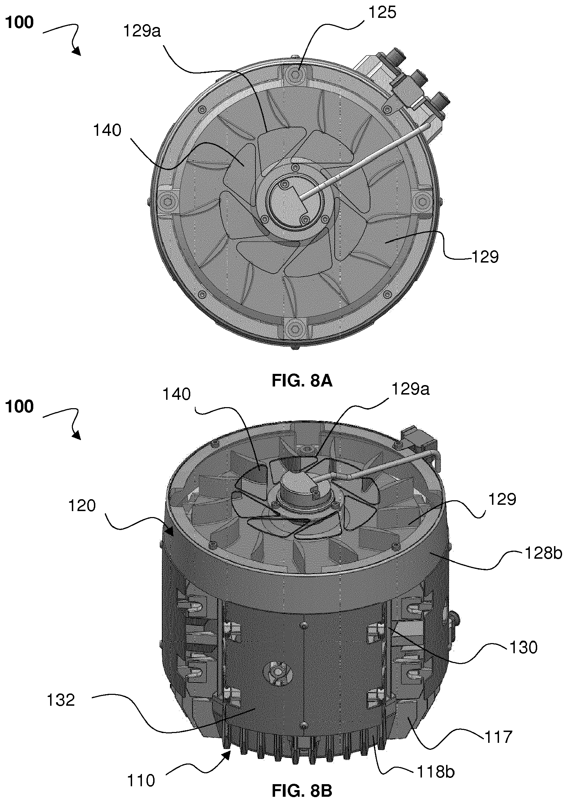

Le ventilateur externe 140 comporte une roue d'entrainement de l'air extérieur fixée à l'arbre de rotation 160 et une plaque de protection 129 fixée à la partie périphérique 128b du flasque arrière 120. Le ventilateur externe 140 est bien visible sur les figures 8A et 8B, qui sont respectivement une vue en plan de la face arrière et une vue en perspective de cette même face arrière du moteur selon le premier mode de réalisation. La plaque de protection 129 comporte des orifices 129a pour l'entrée de l'air extérieur qui est aspiré par la roue d'entrainement du ventilateur 140. Le ventilateur externe 140 est de dimension plus importante que celle des ventilateurs internes 181 et 182. La dimension du ventilateur 140 est choisie en fonction de la puissance du moteur et de la vitesse de rotation maximale, de manière à assurer un refroidissement optimal.

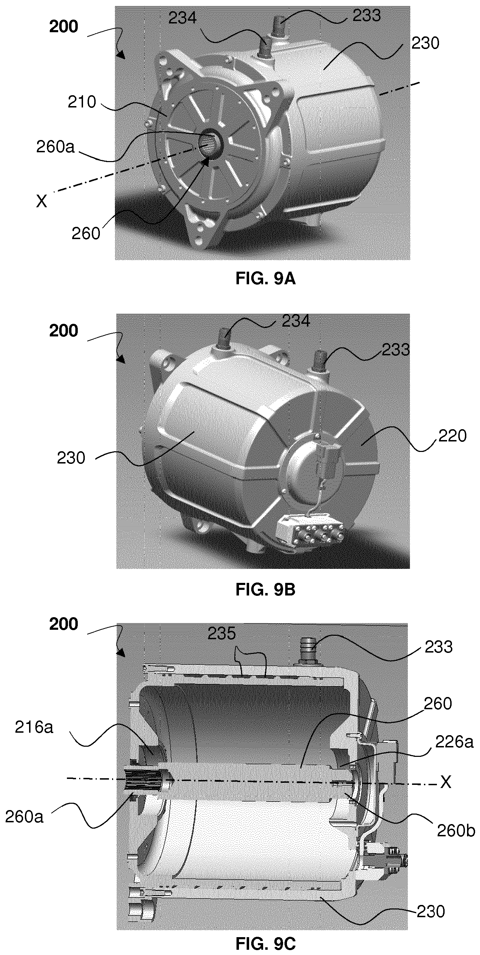

Selon un second mode de réalisation, n'étant pas couvert par les revendications annexées et donc étant considéré comme ne faisant pas partie de la présente invention, illustré aux figures 9A, 9B et 9C, la machine selon l'invention comporte un dispositif de refroidissement par liquide de la carcasse du moteur.

De manière analogue au moteur selon le premier mode de réalisation de l'invention, le moteur 200 comporte :
- un stator disposé dans une carcasse 230, ledit stator comportant des bobines ;
- un rotor comportant un corps fixé à un arbre de rotation 260 et monté rotatif dans le stator ;
- une paire de paliers qui supportent un côté d'entraînement d'une charge 260a de l'arbre de rotation 260 et un côté opposé au côté d'entraînement 260b de la charge de l'arbre de rotation 260 ;
- un flasque avant 210 disposé à une première extrémité de la carcasse 230 et supportant le côté d'entrainement 260a de la charge de l'arbre de rotation 260 ;
- un flasque arrière 220 disposé à une deuxième extrémité de la carcasse 230 opposée à la première extrémité, et supportant le côté opposé au côté d'entraînement 260b de la charge de l'arbre de rotation 260 ;
   les flasques avant et arrière comportant des moyens d'étanchéité pour fermer de manière étanche la carcasse 230, et comportant chacun une face interne, une face externe, et un logement (216a, 226a) positionné dans une partie médiane de la face interne pour recevoir un desdits paliers ; et
- un système de refroidissement comportant une paire de ventilateurs internes disposés à l'intérieur de la carcasse pour créer un flux d'air à l'intérieur de la carcasse lors de la rotation du rotor, chaque ventilateur étant monté fixe sur l'arbre de rotation entre le corps du rotor et un palier ;
la face interne des flasques comportant des ailettes agencées sur une partie périphérique du logement du palier pour orienter le flux d'air et capter la chaleur dudit flux d'air.

Selon ce deuxième mode de réalisation, le refroidissement de l'intérieur de la machine est identique à celui décrit en relation avec le premier mode de réalisation de l'invention, c'est-à-dire une paire de ventilateurs internes en interaction avec les ailettes des faces internes des flasques avant et arrière, tel que détaillé plus haut dans la description.

Selon ce deuxième mode de réalisation, les moyens de refroidissement externe pour refroidir la carcasse et les flasques avant et arrière comportent un circuit de liquide de refroidissement. Ce circuit comprend une entrée 233 du liquide de refroidissement, une sortie 234 du liquide de refroidissement, et un réseau de conduits 235 en contact avec la carcasse 230, dans lequel un liquide de refroidissement, tel que de l'eau, ou tout autre liquide apte à refroidir la machine, circule pour refroidir la carcasse 230 et les flasques avant 210 et arrière 220.

Avantageusement, le réseau de conduits est un serpentin intégré dans la carcasse 230, tel que cela est visible sur la figure 9C, où les ouvertures 235 correspondent au serpentin selon une coupe longitudinale du moteur.

Dans l'exemple de moteur 200 représenté aux figures 9A, 9B et 9C, le moteur est fermé, c'est-à-dire que le moteur comprend un boîtier étanche formé par la carcasse 230 et les flasques avant 210 et arrière 220. Les flasques ferment de manière étanche la carcasse. Plus spécifiquement, le flasque avant 210 et une partie de la carcasse 230 forme une même pièce, et le flasque arrière 220 et une partie de la carcasse 230 forment une deuxième pièce unitaire, la réunion des deux pièces formant le boîtier étanche, et permettant l'intégration du serpentin dans la carcasse 230.

Le circuit de refroidissement liquide permet de refroidir toute la carcasse 230 du moteur 200, y compris les flasques 210 et 220, par échange de chaleur entre ces éléments et le liquide de refroidissement.

La présente invention s'applique avantageusement aux moteurs à réluctance synchrone, et de préférence aux machines ayant une puissance comprise entre 20 kW et 180 kW. A titre d'exemple non limitatif, le moteur refroidi selon l'invention peut être un moteur à réluctance synchrone d'une puissance continue de 30 kW, de puissance transitoire (Peak) 52 kW, pouvant fonctionner avec une tension d'alimentation du bus DC de 350 V, et pouvant présenter les dimensions suivantes : diamètre extérieur du rotor 134 mm, diamètre extérieur du stator de 200 mm, diamètre extérieur de la carcasse de 250 mm, longueur du moteur de 214 mm, longueur de la partie active (correspondant à la longueur de l'empilement des tôles du rotor) de 100 mm.

## Revendications

1. Machine électrique tournante fermée (100. 200) comportant:
- un stator (190) disposé dans une carcasse (130, 230), ledit stator comportant des bobines ;
- un rotor (150) comportant un corps fixé à un arbre de rotation (160. 260) et monté rotatif dans le stator, l'arbre tournant autour d un axe (X) ;
- une paire de paliers (171, 172) qui supportent un côté d'entraînement d'une charge (160a, 260a) de l'arbre de rotation (160, 260) et un côté opposé au côté d'entraînement (160b, 260b) de la charge de l'arbre de rotation (160. 260);
- un flasque avant (110, 210) disposé à une première extrémité de la carcasse et supportant le côté d'entraînement (160a. 260a) de la charge de l'arbre de rotation (160, 260);
- un flasque arrière (120, 220) disposé à une deuxième extrémité de la carcasse opposée à la première extrémité, et supportant le côté opposé au côté d'entraînement (160b. 260b) de la charge de l'arbre de rotation (160. 260); lesdits flasques avant et arrière comportant des moyens d'étanchéité (114a. 114b, 124a, 124b) configurés pour fermer de manière étanche la carcasse (130. 230), et comportant chacun une face interne (111, 121), une face externe (112, 122). et un logement (116a, 126a. 216a. 226a) positionné dans une partie médiane de la face interne pour recevoir un desdits paliers, et
- un système de refroidissement comportant:
- une paire de ventilateurs internes (181, 182) disposés à l'intérieur de la carcasse(130, 230) configurés pour créer un flux d'air à l'intérieur de la carcasse lors de la rotation du rotor (150).
chaque ventilateur étant monté fixe sur l'arbre de rotation (160, 260) entre le corps du rotor (150) et un palier (171, 172). et
- des moyens de refroidissement externe configurés pour refroidir la carcasse et les flasques avant et arrière, la face interne des flasques comportant des ailettes (113. 123) agencées sur une partie périphérique du logement (116a, 126a. 216a, 226a) du palier (171, 172) configurées pour orienter le flux d'air et capter la chaleur dudit flux d'air,
dans laquelle les moyens de refroidissement externe comprennent un ventilateur externe (140) disposé en regard de la face externe (122) du flasque amère (120) et monté fixe sur l'arbre de rotation (160) configuré pour envoyer de l'air extérieur le long de la carcasse (130) en direction du flasque avant (110).
dans laquelle
- la carcasse (130)
a une surface externe comportant un ensemble d'ailettes de refroidissement (131) allongées sensiblement selon un axe parallèle à l'axe (X) de l'arbre de rotation (160),
- le flasque arrière (120) comporte une partie centrale (128a) en forme do couronne reliée à une partie périphérique cylindrique (128b), et au moins une ouverture (127) disposée entre ladite partie centrale (128a) et ladite partie périphérique (128b) du flasque amère (120) configuré pour diriger l'air extérieur envoyé par le ventilateur externe (140) dans des passages formés par l'ensemble des ailettes de refroidissement (131) de la surface externe de la carcasse (130);
la machine électrique étant **caractérisée en ce qu'**elle comportent en outre des plaques métalliques (132) montées sur la carcasse (130) et entourant les ailettes de refroidissement (131), configurées pour maintenir l'air à proximité de la surface externe de la carcasse et des ailettes de refroidissement lors de sa circulation le long de la carcasse ;
dans laquelle le flasque avant (110) comporte une partie centrale (118a) en forme de couronne reliée à une partie périphérique cylindrique (118b), ladite partie périphérique comportant des ailettes dissipatives de la chaleur (117) sur sa face externe, lesdites ailettes dissipatives (117) de la chaleur étant allongées sensiblement selon un axe parallèle à l'axe (X) de l'arbre de rotation, et prolongeant les passages formés par les ailettes de refroidissement (131) de la carcasse (130).

2. Machine électrique selon la revendication 1, dans laquelle les ailettes de la face interne des flasques sont planes et ont une forme générale de trapèze comportant des bases orthogonales à Taxe (X) de l'arbre de rotation (160, 260) et un côté opposé au logement (116a. 126a. 216a. 226a) présentant une concavité.

3. Machine électrique selon l'une quelconque des revendications 1 et 2, dans laquelle le ventilateur externe (140) comporte une roue d'entraînement de l'air extérieur
fixée à l'arbre de rotation (160) et une plaque de protection (129) comportant des orifices (129a) pour l'entrée de l'air extérieur, ladite plaque étant fixée à la partie périphérique (128b) du flasque arrière (120).

4. Machine électrique selon l'une quelconque des revendications précédentes, ayant une puissance comprise entre 20 kvv et 75 kvv.

5. Machine électrique selon l'une quelconque des revendications précédentes, à reluctance synchrone.

## Patentansprüche

1. Geschlossene rotierende elektrische Maschine (100, 200), umfassend:
- einen Stator (190), der in einem Gehäuse (130, 230) angeordnet ist, wobei der Stator Spulen umfasst;
- einen Rotor (150), der einen Körper umfasst, der an einer Drehwelle (160, 260) befestigt und drehbar im Stator montiert ist, wobei sich die Welle um eine Achse (X) dreht;
- ein Paar Lager (171, 172), die eine Antriebsseite einer Last (160a, 260a) der Drehwelle (160, 260) und eine der Antriebsseite (160b, 260b) gegenüberliegende Seite der Last auf der Drehwelle (160, 260);
- einen vorderen Flansch (110, 210), der an einem ersten Ende der Karkasse angeordnet ist und die Antriebsseite (160a, 260a) der Last der Drehwelle (160, 260) trägt;
- einen hinteren Flansch (120, 220), der an einem zweiten Ende der Karkasse gegenüber dem ersten Ende angeordnet ist und die Seite gegenüber der Antriebsseite (160b, 260b) der Last der Drehwelle (160, 260) trägt; wobei der vordere und der hintere Flansch Dichtungsmittel (114a, 114b, 124a, 124b) umfassen, die zum Abdichten der Karkasse (130, 230) konfiguriert sind und jeweils eine Innenfläche (111, 121), eine Außenfläche (112, 122) umfassen, und ein Gehäuse (116a, 126a, 216a, 226a), das in einem mittleren Teil der Innenfläche positioniert ist, um eines der Lager aufzunehmen; und
- ein Kühlsystem bestehend aus:
- ein Paar Innenlüfter (181, 182), die innerhalb des Gehäuses (130, 230) angeordnet sind, um während der Drehung des Rotors (150) einen Luftstrom innerhalb des Gehäuses zu erzeugen, wobei jeder Lüfter fest auf der Drehwelle (160) montiert ist, 260) zwischen dem Rotorkörper (150) und einem Lager (171, 172); und
- externe Kühlmittel, die zum Kühlen der Karkasse und des vorderen und hinteren Flansches konfiguriert sind, wobei die Innenseite der Flansche Rippen (113, 123) umfasst, die an einem Umfangsteil des Gehäuses (116a, 126a, 216a, 226a) des Lagers (171, 172) konfiguriert, um den Luftstrom zu lenken und die Wärme des Luftstroms einzufangen;
wobei die externen Kühlmittel einen externen Lüfter (140) umfassen, der gegenüber der Außenfläche (122) des hinteren Flansches (120) angeordnet und fest auf der Wellendrehung (160) montiert ist, konfiguriert, um Außenluft entlang der Karkasse (130) in der Richtung des vorderen Flansches (110);
worin
- die Karkasse (130) eine Außenfläche aufweist, die einen Satz Kühlrippen (131) umfasst, die sich im Wesentlichen entlang einer Achse parallel zur Achse (X) der Drehwelle (160) erstrecken;
- der hintere Flansch (120) einen Mittelteil (128a) in Form einer Krone umfasst, der mit einem zylindrischen Umfangsteil (128b) verbunden ist, und mindestens eine Öffnung (127) umfasst, die zwischen dem Mittelteil (128a) und dem Umfangsteil angeordnet ist (128b) des hinteren Flansches (120), der konfiguriert ist, um die von dem Außenlüfter (140) gesendete Außenluft in Durchgänge zu leiten, die durch die Anordnung von Kühlrippen (131) der Außenfläche der Karkasse (130) gebildet werden;
wobei die elektrische Maschine **dadurch gekennzeichnet ist, dass** sie ferner Metallplatten (132) umfasst, die an dem Gehäuse (130) angebracht sind und die Kühlrippen (131) umgeben, die so konfiguriert sind, dass sie Luft nahe der Außenfläche des Gehäuses und der Rippen halten. Abkühlung während seiner Zirkulation entlang der Karkasse;
wobei der vordere Flansch (110) einen Mittelteil (118a) in Form einer Krone umfasst, der mit einem zylindrischen Umfangsteil (118b) verbunden ist, wobei der Umfangsteil wärmeableitende Rippen (117) an seiner Außenfläche umfasst, die wärmeableitenden Rippen (117), die im Wesentlichen entlang einer Achse parallel zur Achse (X) der Drehwelle verlängert ist und die durch die Kühlrippen (131) der Karkasse (130) gebildeten Durchgänge verlängert.

2. Elektrische Maschine nach Anspruch 1, bei der die Rippen der Innenfläche der Flansche eben sind und die allgemeine Form eines Trapezes haben, das zur Achse (X) der Drehwelle (160, 260) orthogonale Basen und a . aufweist Seite gegenüber dem Gehäuse (116a, 126a, 216a, 226a) mit einer Konkavität.

3. Elektrische Maschine nach einem der Ansprüche 1 und 2, wobei der Außenlüfter (140) ein an der Drehwelle (160) befestigtes Außenluftantriebsrad und eine Abdeckplatte (129) mit Öffnungen (129a) für den Eintritt aufweist von Außenluft, wobei die Platte am Umfangsteil (128b) des hinteren Flansches (120) befestigt ist.

4. Elektrische Maschine nach einem der vorhergehenden Ansprüche, mit einer Leistung zwischen 20 kW und 75 kW.

5. Elektrische Maschine nach einem der vorhergehenden Ansprüche, mit synchroner Reluktanz.

## Claims

1. Closed rotating electric machine (100, 200) comprising:
- a stator (190) arranged in a casing (130, 230), said stator comprising coils;
- a rotor (150) comprising a body fixed to a rotation shaft (160, 260) and rotatably mounted in the stator, the shaft rotating about an axis (X);
- a pair of bearings (171, 172) which support a drive side of a load (160a, 260a) of the rotation shaft (160, 260) and a side opposite to the drive side (160b, 260b) of the load on the rotating shaft (160, 260);
- a front flange (1 10, 210) disposed at a first end of the carcass and supporting the drive side (160a, 260a) of the load of the rotation shaft (160, 260);
- a rear flange (120, 220) disposed at a second end of the carcass opposite the first end, and supporting the side opposite to the drive side (160b, 260b) of the load of the rotation shaft (160, 260); said front and rear flanges comprising sealing means (114a, 114b, 124a, 124b) configured for sealing the carcass (130, 230), and each comprising an internal face (111, 121), an external face (112, 122), and a housing (116a, 126a, 216a, 226a) positioned in a middle part of the inner face to receive one of said bearings; and
- a cooling system comprising:
- a pair of internal fans (181, 182) arranged inside the casing (130, 230) configured to create an air flow inside the casing during the rotation of the rotor (150), each fan being fixedly mounted on the rotation shaft (160, 260) between the rotor body (150) and a bearing (171, 172); and
- external cooling means configured for cooling the carcass and the front and rear flanges, the inner face of the flanges comprising fins (113, 123) arranged on a peripheral part of the housing (116a, 126a, 216a, 226a) of the bearing (171, 172) configured to direct the air flow and capture the heat of said air flow;
wherein the external cooling means comprise an external fan (140) disposed opposite the external face (122) of the rear flange (120) and mounted fixedly on the shaft rotation (160) configured to send outside air along the carcass (130) in the direction of the front flange (110);
wherein
- the carcass (130) has an outer surface comprising a set of cooling fins (131) elongated substantially along an axis parallel to the axis (X) of the rotation shaft (160);
- the rear flange (120) comprises a central part (128a) in the form of a crown connected to a cylindrical peripheral part (128b), and at least one opening (127) arranged between said central part (128a) and said peripheral part (128b) of the rear flange (120) configured to direct the outside air sent by the external fan (140) into passages formed by the assembly of cooling fins (131) of the external surface of the carcass (130);
the electric machine being **characterized in that** it further comprises metal plates (132) mounted on the casing (130) and surrounding the cooling fins (131), configured for maintaining air near the outer surface of the casing and the fins. cooling during its circulation along the carcass;
wherein the front flange (110) comprises a central part (118a) in the form of a crown connected to a cylindrical peripheral part (118b), said peripheral part comprising heat dissipating fins (117) on its outer face, said heat dissipating fins (117) being elongated substantially along an axis parallel to the axis (X) of the rotation shaft, and extending the passages formed by the cooling fins (131) of the carcass (130).

2. Electric machine according to Claim 1, in which the fins of the internal face of the flanges are plane and have the general shape of a trapezoid comprising bases orthogonal to the axis (X) of the rotation shaft (160, 260) and a side opposite the housing (116a, 126a, 216a, 226a) having a concavity.

3. Electric machine according to any one of claims 1 and 2, wherein the external fan (140) has an external air drive wheel fixed to the rotation shaft (160) and a cover plate (129) comprising orifices (129a) for the entry of outside air, said plate being fixed to the peripheral part (128b) of the rear flange (120).

4. Electric machine according to any one of the preceding claims, having a power of between 20 kW and 75 kW.

5. Electric machine according to any one of the preceding claims, with synchronous reluctance.
